# EUROPEAN PATENT APPLICATION

(11) **EP 3 239 241 A1**
(43) Date of publication of application: **01.11.2017**
(21) Application number: 15871765.2
(22) Date of filing: 23.10.2015
(51) Int. Cl.: C08L 81/02, C08L 67/02, B29C 45/14

(54) **RESIN COMPOSITION, METAL-RESIN COMPOSITE, AND PREPARATION METHOD AND USE THEREOF, AND ELECTRONIC PRODUCT HOUSING**

(30) Priority: 26.12.2014 CN 201410836687
(71) Applicant: BYD Company Limited, Shenzhen, Guangdong 518118 (CN)
(72) Inventor: ZHANG, Xiong, Shenzhen Guangdong 518118 (CN); WEN, Jianjun, Shenzhen Guangdong 518118 (CN); ZHAO, Zhengsheng, Shenzhen Guangdong 518118 (CN); ZHOU, Wei, Shenzhen Guangdong 518118 (CN); GONG, Qing, Shenzhen, Guangdong 518118 (CN)
(74) Representative: Gulde & Partner
(86) International application number: PCT/CN2015/092722
(87) International publication number: WO 2016/101692

(57) **Abstract**

A resin composition, a metal-resin composite formed with the resin composition and a metal substrate and a preparation method and use thereof, and an electronic product shell using the resin composition are provided. The resin composition comprises a base resin, a modified resin and a fiber, wherein the base resin is one or two or more of a polyarylene sulfide resin, a polyether resin, and a polyester resin, and the modified resin has a melting point that is 3-24°C higher than the glass transition temperature of the base resin.

## Description

### CROSS REFERENCE TO RELATED APPLICATION

This application claims the priority of Chinese Patent Application No. 201410836687.2 filed in China on December 26, 2014, the content of which is incorporated herein by reference in its entirety.

### BACKGROUND

### Technical Field

The present disclosure relates to a resin composition, and particularly to a metal-resin composite formed with the resin composition and preparation method and use thereof, and an electronic product shell, where a resin member in the electronic product shell is formed with the resin composition.

### Related Art

With the development and gradually widened scope of use of electronic devices, increasingly higher requirements are imposed on the comprehensive performance of a metal-resin composite. For example, when the metal-resin composite is used for forming an electronic product shell, a resin layer in the metal-resin composite is not only required to have a high impact strength, but also required to have a low dielectric constant and a low dielectric loss, so as to reduce the attenuation of an electromagnetic signal. However, the resin layer in an existing metal-resin composite is difficult to have both the high impact strength and the low dielectric constant and low dielectric loss at the same time.

Therefore, the metal-resin composite and the preparation thereof are still needed to be further improved.

### SUMMARY

In order to overcome the technical problem that the resin layer in an existing metal-resin composite is difficult to have both the high impact strength and the low dielectric constant and low dielectric loss at the same time, an object of the present invention is to provide a resin composition, and a metal-resin composite formed with the resin composition and a metal. A resin layer in the metal-resin composite formed with the resin composition and the metal has not only a high impact strength and also a low dielectric constant and a low dielectric loss.

According to a first aspect of the present disclosure, the present disclosure provides a resin composition, which comprises a base resin, a modified resin, and a fiber. The base resin is one or two or more of a polyarylene sulfide resin, a polyether resin, and a polyester resin. The modified resin has a melting point that is 3-24°C higher than the glass transition temperature of the base resin, and present in an amount of 1-10 parts by weight, relative to 100 parts by weight of the base resin.

According to a second aspect of the present disclosure, the present disclosure provides a metal-resin composite, which comprises a metal substrate and a resin layer attached to at least part of a surface of the metal substrate, where the resin layer is formed with the resin composition according to the present disclosure.

According to a third aspect of the present disclosure, the present disclosure provides a method for preparing a metal-resin composite, which comprises mixing a resin composition according to the present disclosure until uniform, injecting onto a surface of a metal substrate, and molding, to form a resin layer on the surface of the metal substrate.

According to a fourth aspect of the present disclosure, the present disclosure provides a metal-resin composite prepared by the method according to the third aspect of the present disclosure.

According to a fifth aspect of the present disclosure, the present disclosure provides use of a metal-resin composite according to the present disclosure in the preparation of an electronic product shell.

According to a sixth aspect of the present disclosure, the present disclosure provides an electronic product shell, which comprises a metal shell body and at least one resin member attached to at least part of an inner surface and/or at least part of an outer surface of the metal shell body, where the resin member is formed with the resin composition according to the present disclosure.

The resin layer in the metal-resin composite formed with the resin composition according to the present disclosure not only has a good impact resistance, thus meeting the requirements of a variety of usage scenarios; but also exhibits a low dielectric constant and a low dielectric loss, and thus can effectively reduce the attenuation of a signal. Therefore, the metal-resin composite according to the present disclosure is particularly suitable for use in the preparation of electronic product shells, particularly a shell of an electronic product having a signal transmitting element and/or a signal receiving element, such as a mobile phone shell.

### BRIEF DESCRIPTION OF THE DRAWINGS

Fig. 1 is cross-sectional views including a front view and a top view that schematically illustrate a mobile phone shell according to the present disclosure; and
Fig. 2 is a cross-sectional view schematically illustrating a smart watch shell according to the present disclosure.

### DETAILED DESCRIPTION

The present disclosure provides a resin composition comprising a base resin, a modified resin, and a fiber.

In the resin composition according to the present disclosure, the modified resin has a melting point that is 3-24°C higher than the glass transition temperature of the base resin, such that a metal-resin composite formed with the resin composition and a metal substrate by integration molding not only has a good impact resistance, but also exhibits a low dielectric constant and a low dielectric loss. Under the premise that the metal-resin composite formed with the resin composition and the metal substrate has a good impact resistance, the modified resin may have a melting point that is 10-20°C higher than the glass transition temperature of the base resin, for the purpose of further reducing the dielectric constant and the dielectric loss. Optionally, the modified resin has a melting point that is 14-18°C higher than the glass transition temperature of the base resin. The modified resin generally has one melting point. In the present disclosure, when a numerical range is described, both end values are inclusive.

In the present disclosure, the glass transition temperature and melting point are determined following a method specified in ASTM D3418-08, in which a midpoint temperature is taken as the glass transition temperature, and a melting peak temperature is taken as the melting point.

For the purpose of further enhancing the impact resistance of the metal-resin composite formed with the resin composition and the metal substrate, the modified resin is a polyolefin having an epoxy group-containing structural unit. The epoxy group may be an end group of a polyolefin molecular chain, or may be present at a side chain of the polyolefin molecular chain. Optionally, the epoxy group is present at a side chain of the polyolefin molecular chain.

In a specific embodiment, the modified resin has an epoxy group-containing structural unit of Formula I: 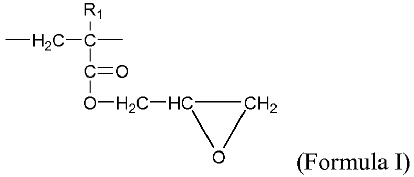 where in Formula I, R₁ is hydrogen or C₁-C₅ alkyl. The C₁-C₅ alkyl includes a linear C₁-C₅ alkyl group and a branched C₃-C₅ alkyl. Specific examples include, but are not limited to, methyl, ethyl, n-propyl, isopropyl, n-butyl, 2,2-dimethylethyl, 2-methylpropyl, n-pentyl, 2-methylbutyl, 3-methylbutyl, 4-methylbutyl, 2,2-dimethylpropyl, 2,3-dimethylpropyl, 2-ethylpropyl, and 3-ethylpropyl.

Optionally, the modified resin has an epoxy group-containing structural unit of Formula II:

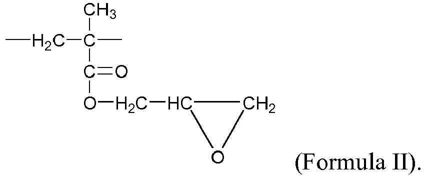

In the resin composition according to the present disclosure, the modified resin further has a structural unit formed by an olefin (e.g. a C₂-C₄ monoolefin), optionally a structural unit formed by ethylene.

In a specific embodiment of the present disclosure, the structural units of the modified resin include a structural unit formed from ethylene and an epoxy group-containing structural unit of Formula II.

In the resin composition according to the present disclosure, the polyolefin useful as the modified resin may be a random copolymer, a block copolymer, or an alternating copolymer. Optionally, the polyolefin useful as the modified resin is a random copolymer.

In the resin composition according to the present disclosure, the content of the epoxy group-containing structural unit in the modified resin may be 1-8 wt%, for example 2-4 wt%, for the purpose of further enhancing the impact resistance of the resin layer in the metal-resin composite formed with the resin composition and the metal substrate.

The modified resin may be commercially available or synthesized through a conventional process, by for example, copolymerizing an olefin with an olefinic monomer containing an epoxy group in its molecular structure. Specific examples of the olefinic monomer include, but are not limited to, glycidyl methacrylate.

In the resin composition according to the present disclosure, the content of the modified resin may be 1-10 parts by weight, relative to 100 parts by weight of the base resin. For the purpose of further enhancing the impact strength of the resin layer formed with the resin composition and further reducing the dielectric constant and the dielectric loss of the resin layer formed with the resin composition, the content of the modified resin may be 4-8 parts by weight, relative to 100 parts by weight of the base resin.

In the resin composition according to the present disclosure, at least a bond force enhancing resin is optionally further contained, the incipient melting temperature of which is not higher than the crystallization temperature of the base resin. Optionally, the incipient melting temperature of the bond force enhancing resin is 10-20°C lower than the crystallization temperature of the base resin. In the resin composition according to the present disclosure, the bond strength between the metal substrate and the resin layer in the metal-resin composite formed with the resin composition and the metal can be further improved by introducing the bond force enhancing resin. Optionally, the incipient melting temperature of the bond force enhancing resin is 14-18°C lower than the crystallization temperature of the base resin. In the resin composition according to the present disclosure, the melting point of the bond force enhancing resin is generally higher than that of the modified resin, by for example, 5-10°C.

In the present disclosure, the incipient melting temperature and the crystallization temperature are determined following a method specified in ASTM D3418-08, in which an extrapolated incipient melting temperature is taken as the incipient melting temperature, and a crystallization peak temperature is taken as the crystallization temperature.

For the purpose of further enhancing the bond strength between the metal substrate and the resin layer in the metal-resin composite formed with the resin composition and the metal substrate, the bond force enhancing resin may be a polyolefin having a structural unit containing a maleic anhydride group.

In the polyolefin useful as the bond force enhancing resin, the content of the structural unit containing a maleic anhydride group may be 0.5-2 wt%. Optionally, in the polyolefin useful as the bond force enhancing resin, the content of the structural unit containing a maleic anhydride group is 1-1.5 wt%, so as to further improve the bond strength of the composite formed with the resin composition and the metal substrate. The content of the structural unit containing a maleic anhydride group can be determined by acid-base titration.

The content of the structural unit containing a maleic anhydride group may be formed by maleic anhydride, that is, the polyolefin useful as the bond force enhancing resin has a structural unit formed by maleic anhydride.

The polyolefin useful as the bond force enhancing resin further has a structural unit formed by an olefin (e.g. a C₂-C₄ monoolefin), optionally a structural unit formed by ethylene.

In a specific embodiment of the present disclosure, the structural units of the the bond force enhancing resin include a structural unit formed by maleic anhydride and a structural unit formed by ethylene.

The polyolefin useful as the bond force enhancing resin may be a random copolymer, a block copolymer, or an alternating copolymer, for example, a random copolymer.

The polyolefin useful as the bond force enhancing resin may be commercially available or synthesized through a conventional process by, for example, copolymerizing an olefin (e.g. ethylene) with maleic anhydride.

In the resin composition according to the present disclosure, the content of the bond force enhancing resin may be 1-5 parts by weight, relative to 100 parts by weight of the base resin. For the purpose of further enhancing the bond strength between the metal substrate and the resin layer in the metal-resin composite formed with the resin composition, the content of the bond force enhancing resin may be 1-4 parts by weight, relative to 100 parts by weight of the base resin.

In the resin composition according to the present disclosure, the base resin is one or two or more of a polyarylene sulfide resin, a polyether resin, and a polyester resin. The polyester resin refers to a polymer containing an ester group (that is, 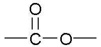 ) in its molecular structure. Specific examples of the base resin include, but are not limited to, one or two or more of polyphenylene sulfide, polyphenylene ether, polycarbonate, poly(cyclohexylene dimethylene terephthalate), poly(diallyl isophthalate), poly(diallyl terephthalate), polybutylene naphthalate, polyethylene terephthalate, and polybutylene terephthalate. For the purpose of further enhancing the bond strength between the metal substrate and the resin layer in the metal-resin composite formed with the resin composition, the base resin is one or two or more selected from a polyphenylene sulfide resin, a polyphenylene ether resin, and polyalkylene terephthalate. The polyalkylene terephthalate may be polybutylene terephthalate and/or polyethylene terephthalate.

In the resin composition according to the present disclosure, the base resin is a partially crystallized polymer having a crystallization temperature and a glass transition temperature. The crystallization temperature of the base resin depends on the species and molecular weight of the base resin. In the resin composition according to the present disclosure, a resin having a crystallization temperature ranging from 100 to 150°C, for example, a resin having a crystallization temperature ranging from 110 to 130°C may be used as the base resin. In the resin composition according to the present disclosure, the glass transition temperature of the base resin is generally at least 30°C lower than its crystallization temperature.

In the resin composition according to the present disclosure, the ash content in the base resin is not higher than 0.2 wt%, so as to further reduce the dielectric loss of the metal-resin composite formed with the resin composition and the metal substrate by integration molding. Optionally, the ash content in the base resin is in the range of 0.1-0.2 wt%. The ash content is the percentages by weight of a burned residue relative to the non-burned base resin determined after the base resin is burned in a muffle furnace at 1000°C for 4 hours in an air atmosphere.

The ash content in the base resin can be controlled in a predetermined range by screening the base resin.

In the resin composition according to the present disclosure, the fiber has a reinforcement effect, and may be a common fiber material. Specifically, the fiber may be one or two or more selected from glass fibers, carbon fibers, and polyamide fibers.

When the fiber is a glass fiber, the silica content in the glass fiber is generally 60 wt% or higher, and generally 60-80 wt%. The inventors of the present disclosure have found during the course of the study that the silica content in the glass fiber has influence on the dielectric constant of the metal-resin composite formed with the resin composition and the metal substrate, and the dielectric constant of the metal-resin composite formed with the resin composition and the metal substrate can be further reduced by using a glass fiber with high silica content. In the resin composition according to the present disclosure, the silica content in the glass fiber can be 70 wt% or higher, whereby the formed metal-resin composite exhibits a much low dielectric constant. For the purpose of further reducing the dielectric constant of the metal-resin composite formed with the resin composition and the metal substrate, the silica content in the glass fiber is 70-75 wt%.

In the resin composition according to the present disclosure, the fiber content may be determined according to a particular usage scenario of the resin composition. Generally, the fiber content may be 10-60 parts by weight, for example, 30-50 parts by weight, relative to 100 parts by weight of the base resin.

In the resin composition according to the present disclosure, at least an additive is further contained, depending on a particular usage scenario, for example, an antioxidant, a photo stabilizer, and a lubricant, to improve the performance of the resin composition and/or impart a new performance to the resin composition.

The antioxidant can increase the antioxidation performance of the resin composition, thus prolonging the life time of the metal-resin composite formed with the resin composition and the metal substrate. The antioxidant may be various antioxidants commonly used in the field of polymers, and may contain, for example, a main antioxidant and an auxiliary antioxidant. The relative amounts of the main antioxidant and the auxiliary antioxidant can be properly determined according to the species thereof. Generally, the weight ratio of the main antioxidant to the auxiliary antioxidant is 1:1-4. The main antioxidant may be a hindered phenol type antioxidant. Specific examples may include, but are not limited to, antioxidant 1098 and antioxidant 1010. The main ingredient of the antioxidant 1098 is N,N'-bis-(3-(3,5-di-t-butyl-4-hydroxyphenyl)propionyl)hexamethylene diamine, and the main ingredient of the antioxidant 1010 is pentaerythritol tetrakis[3-(3,5-di-t-butyl-4-hydroxyphenyl)propionate]. The auxiliary antioxidant may be a phosphite type antioxidant. Specific examples may include, but are not limited to antioxidant 168, in which the main ingredient is tris(2,4-di-t-butylphenyl) phosphite.

The amount of the antioxidant may be conventional, and generally 0.01-5 parts by weight, for example, 0.1-1 parts by weight, relative to 100 parts by weight of the base resin.

The photo stabilizer may be various generally known photo stabilizers, for example, a hindered amine type photo stabilizer. Specific examples may include, but are not limited to bis(2,2,6,6-tetramethyl-4-piperidinyl) sebacate.

The amount of the photo stabilizer may be 0.01-5 parts by weight, for example, 0.1-1 parts by weight, relative to 100 parts by weight of the base resin.

The lubricant may be various substances capable of improving the fluidity of a polymer melt, for example, one or two or more selected from ethylene/vinyl acetate copolymer wax (EVA wax), polyethylene wax (PE wax), a stearate, and silicone. The content of the lubricant may be 0.1-5 parts by weight, for example, 0.5-2 parts by weight, relative to 100 parts by weight of the base resin.

The resin composition according to the present disclosure is particularly suitable to bond to a metal substrate, to form a metal-resin composite having not only high impact resistance, but also low dielectric constant and low dielectric loss.

Therefore, the present disclosure further provides a metal-resin composite, which comprises a metal substrate and a resin layer attached to at least part of a surface of the metal substrate, where the resin layer is formed with the resin composition according to the present disclosure. The species and contents of the components in the resin composition have been described in detail above, and thus are not elaborated here again.

The bond force between the metal substrate and the resin layer in the metal-resin composite according to the present disclosure can be enhanced by various methods commonly used in the art. Optionally, holes and/or grooves may be distributed on a surface of the metal substrate to which the resin layer is attached, and a part of the resin in the resin layer extends downward and is filled in the holes and/or grooves, thus anchoring the resin layer into the metal substrate. The method for forming holes and/or grooves on the surface of the metal substrate will be described in detail below, and no description is given here.

In the metal-resin composite according to the present disclosure, the thickness of the resin layer can be determined according to particular usage scenarios of the metal-resin composite. Generally, the thickness of the resin layer is 0.3-2 mm.

In the metal-resin composite according to the present disclosure, the material of the metal substrate can be determined according to particular usage scenarios of the metal-resin composite. Generally, the material of the metal substrate may be aluminium, aluminium alloys, magnesium, magnesium alloys, or stainless steel.

The present disclosure further provides a method for preparing a metal-resin composite, which comprises mixing a resin composition according to the present disclosure until uniform, injecting onto a surface of a metal substrate, and molding, to form a resin layer on the surface of the metal substrate. The resin composition has been described in detail above, and thus are not elaborated here again.

The components in the resin composition according to the present disclosure can be uniformly mixed through various processes. For example, the components of the resin composition according to the present disclosure are uniformly mixed in a twin screw extruder and then granulated.

The resulting mixture is injected onto the surface of the metal substrate by a conventional method, and then molded, thereby forming a resin layer on the surface of the metal substrate. In a specific embodiment of the present disclosure, the metal substrate is positioned in a mould, and a mixture of the resin composition is injected by means of injection molding.

The injection molding conditions may be conventional. Optionally, the injection molding conditions include: mould temperature 100-160°C, holding time 1-60 seconds, injection pressure 50-140 MPa, injection time 0.2-3 seconds, and delay time 1-60 seconds.

The injection volume of the resin composition can be determined according to an intended thickness of the resin layer. Generally, the injection volume of the resin composition is such that the thickness of the formed resin layer is 0.3-2 mm.

According to the method of the present disclosure, holes and/or grooves may be formed in advance on a surface of the metal substrate on which the resin layer is intended to be formed, for the purpose of further enhancing the bond strength between the metal substrate and the resin layer in the ultimately formed metal-resin composite The holes and/or grooves may be formed on the surface of the metal substrate through various processes commonly used.

In an embodiment, the metal substrate may be anodized, to form an anodized film layer on the surface of the metal substrate. Pores are distributed in the anodized film layer, and a part of the resin composition is filled in the pores of the anodized film layer when the resin composition is injected onto the surface of the metal substrate. The method for anodizing the metal substrate is well known to those skilled in the art, and not elaborated herein again.

In another embodiment, the metal substrate may be positioned in an etching solution, to form corrosion holes on the surface of the metal. The type of the etching solution is not particularly limited, and may be determined according to the material of the metal substrate. The corrosion holes formed generally have a diameter ranging from 100 to 2000 nm. The depth of the corrosion holes may be 10-50% of the thickness of the metal substrate.

The two implementations may also be used in combination.

The present disclosure also provides a metal-resin composite prepared by the method according to the present disclosure.

The metal-resin composite according to the present disclosure has not only a high impact strength, but also a dielectric constant and a low dielectric loss, and is particularly suitable for use in the preparation of electronic product shells, particularly a shell of an electronic product having a signal transmitting element and/or a signal receiving element, such as a mobile phone shell.

Therefore, the present disclosure also provides use of a metal-resin composite according to the present disclosure in the preparation of an electronic product shell.

The present disclosure further provides an electronic product shell, which comprises a metal shell body and at least one resin member attached to at least part of an inner surface and/or at least part of an outer surface of the metal shell body, where the resin member is formed with the resin composition according to the present disclosure. In the present disclosure, the shell includes not only a shell having a sheet-like structure, and also a variety of frame structures, such as outer frames.

In the electronic product shell according to the present disclosure, at least one cutout is provided on the metal shell body as desired, to fit an element of an electronic product that needs to be kept away from the metal shell body at a position corresponding the cutout. In an embodiment, as the metal has a shielding effect on the electromagnetic signal, the position of the cutout at least partially corresponds to a position at which a signal transmitting element and/or a signal receiving element is fitted. At this time, a resin member may be provided at the position of the cutout in such a manner that a part of the resin in the resin member is filled in the cutout. The signal transmitting element and/or the signal receiving element may be fitted on the resin member.

In the electronic product shell according to the present disclosure, the metal shell body may have a unitary structure or a spliced structure. The spliced structure means that the metal shell body includes at least two separate portions, which are spliced together to form the metal shell body.

When the metal shell body has a spliced structure, the adjacent two portions may be bonded together by using an adhesive. In a specific embodiment, the adjacent two portions are spliced at the position where the resin member is provided. The resin member is lap joined to the adjacent two portions respectively and covers the splicing position (that is, the adjacent two portions are bridged by the resin member), thereby increasing the bond strength at the splicing position. Moreover, the metal shell body may be divided into multiple portions based on the internal structure of the electronic product, and the resin member functions to integrate the metal shell body, and serves as a base for mounting some electronic elements as well.

In the electronic product shell according to the present disclosure, the resin member is attached to at least part of the outer surface of the metal shell body, and the resin member may cover the entire or a part of the outer surface of the metal shell body, to form a pattern, for example, a decorative pattern.

In the electronic product shell according to the present disclosure, when the resin member is attached to the inner surface of the metal shell body, the resin member may be provided at one or more positions desired. In a specific embodiment, the resin member is attached to the entire inner surface of the metal shell body. In this case, the resin member may have a unitary structure. This specific embodiment is particularly applicable to a scenario where the metal shell body has a spliced structure.

The electronic product shell according to the present disclosure may be a shell of any electronic products that need a metal shell, for example, a shell or frame of a mobile terminal, or a shell or frame of a wearable electronic device. The mobile terminal refers to a device that is in a mobile state and has wireless transmission capabilities, such as a mobile phone, a portable computer (including a laptop and a tablet). The wearable electronic device is a wearable smart device, such as a smart watch, and a smart bracelet. The electronic product may be specifically, but is not limited to, one or two or more of a mobile phone, a portable computer (including a laptop and a tablet), a smart watch, and a smart bracelet.

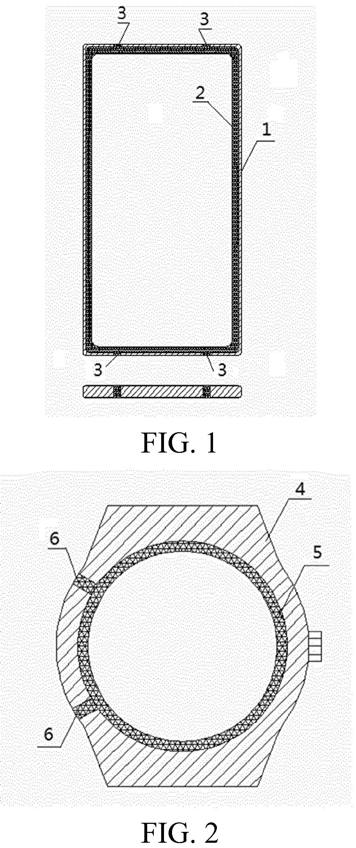

Fig. 1 shows a front view and a top view of an embodiment in which the electronic product shell is a mobile phone shell. As shown in Fig. 1, multiple cutouts 3 are opened on a metal shell body 1 of a mobile phone at positions corresponding to the positions where an antenna and various keys are mounted. A resin layer 2 is attached to an entire inner surface of the metal shell body 1 of the mobile phone. The resin layer 2 has a unitary structure and a part of the resin in the resin layer 2 is filled in the cutouts 3.

Fig. 2 shows a front view of an embodiment in which the electronic product shell is a smart watch shell. As shown in Fig. 2, signal element cutouts 6 are provided on a metal shell body 4 of a smart watch at positions corresponding to the positions where the signal transmitting element and/or the signal receiving element are mounted. A resin lining layer 5 is attached to an inner surface of the metal shell body 4 of the smart watch, and a part of the resin in the resin lining layer 5 is filled in the signal element cutouts 6. Signal elements can be mounted at corresponding positions on the resin lining layer 5.

The electronic product shell may be prepared by the method for preparing a metal-resin composite as described above, which is not elaborated here again.

The electronic product shell according to the present disclosure has a good impact resistance, and also a low dielectric constant and a dielectric loss.

Hereinafter, the present disclosure will be described in detail by way of examples; however, the scope of the present disclosure is not limited thereto.

In the following examples and comparative examples, the glass transition temperature, the melting point, the incipient melting temperature, and the crystallization temperature are determined following the methods as specified in ASTM D3418-08, in which a midpoint temperature is taken as the glass transition temperature, a melting peak temperature is taken as the melting point, an extrapolated incipient melting temperature is taken as the incipient melting temperature, and a crystallization peak temperature is taken as the crystallization temperature.

In the following examples and comparative examples, the tensile strength (tensile strength at break) of a specimen prepared with the resin composition is tested following the method specified in ASTM D638-2010, in which an I-shaped specimen is used.

In the following examples and comparative examples, the average shear strength between the metal substrate and the resin layer in the metal-resin composite is tested on INSTRON 3369 universal testing machine following the method specified in ASTM D1002-10, in which the metal substrate is lap joined to the resin layer at a site of 5 mm long x 15 mm wide.

In the following examples and comparative examples, the notched Izod impact strength of a specimen prepared with the resin composition is tested following the method specified in ASTM D256-06, in which the test specimen has a size of 63.5 mm x 12.7 mm x 3.0 mm (the notch on the test specimen is 2.54 mm deep).

In the following examples and comparative examples, the dielectric constant and the dielectric loss tangent of the specimen prepared with the resin composition are measured by a resonant cavity method.

In the following examples and comparative examples, the ash content in the base resin is determined by burning in a muffle furnace, through a process comprising specifically transferring the base resin to a muffle furnace at 1000°C, burning for 4 hrs in the air atmosphere, collecting the burned residue, and weighing, where the percentages by weight of the residue relative to the weight of the base resin before burning is taken as the ash content in the base resin.

In the following examples and comparative examples, the corrosion holes on the surface of the etched metal substrate are observed under the model S-4800 electron microscope purchased from Hitachi, Ltd, Japan and then the inner diameter is determined.

The present disclosure is described with reference to Examples 1-6.

### Example 1

(1) An A5052 aluminium alloy plate of 1.0 mm in thickness was cut into a rectangular plate of 100 mm long x 15 mm wide, and then immersed for 1 min in a 1 wt% aqueous NaOH solution (where the solution temperature was 40°C). The aluminium alloy plate was removed, washed 3 times with deionized water, and dried to obtain a metal substrate. The surface of the metal substrate was observed under an electron microscope, to determine that corrosion holes with an average inner diameter of 100 nm are distributed on the surface of the aluminium alloy plate.
(2) 63 parts by weight of a polyphenylene sulfide resin (PPS-Hb available from Sichuan Deyang Chemical Co., Ltd, in which the ash content is 0.19 wt%, the crystallization temperature is 120°C, and the glass transition temperature is 89°C), 2 parts by weight of a bond force enhancing resin (GR209 available from Dow Chemical Company, which is a random copolymer of maleic anhydride with ethylene, in which the content of the structural unit formed by maleic anhydride is 1.5 wt%, the incipient melting temperature is 105°C, and the melting point is 115°C), and 5 parts by weight of a modified resin (Lotader AX8840 available from Arkema, which is a random copolymer of ethylene with glycidyl methacrylate, in which the content of the structural unit formed by glycidyl methacrylate is 4 wt%, and the melting point is 106°C) were uniformly mixed. Then 30 parts by weight of D glass fiber (D-glass available from Chongqing International Composite Materials Co., Ltd, in which the silica content is 75 wt%) and 1 part by weight of silicone as a lubricant (available from Wacker Chemie, under the trademark GENIOPLAST) were added, mixed uniformly in a twin screw extruder and then granulated by extrusion, to obtain a granular material. The granular material was injection molded, to obtain specimens that were used in the tensile test, the notched Izod impact test, and the dielectric loss test respectively, to determine the tensile strength, the notched Izod impact strength, the dielectric constant, and the dielectric loss tangent. The result is shown in Table 1.
(3) A melt of the granular material obtained in Step (2) was injected onto the surface of the metal substrate obtained in Step (1) by an injection molding machine, and cooled to obtain a metal-resin composite, in which the mould temperature was 110°C, the nozzle temperature was 300°C, the holding time was 2 seconds, the injection pressure was 50 MPa, the injection time was 1 second, and the delay time was 5 seconds. The formed resin layer has a size of 100 mm long x 15 mm wide x 1 mm thick, the metal substrate is lap joined to the resin layer at a site of 5 mm long x 15 mm wide. The performance data of the metal-resin composite is shown in Table 1.

### Comparative Example 1

(1) A metal substrate was prepared through the same method as described in Step (1) of Example 1.
(2) A granular resin material was prepared through the same method as described in Step (2) of Example 1, except that no modified resin was used.
(3) A metal-resin composite was prepared through the same method as described in Step (3) of Example 1, except that the granular resin material prepared in Step (2) of Comparative Example 1 was used. The performance data of the metal-resin composite is shown in Table 1.

### Comparative Example 2

(1) A metal substrate was prepared through the same method as described in Step (1) of Example 1.
(2) A granular resin material was prepared through the same method as described in Step (2) of Example 1, except that no modified resin, but 5 parts by weight of Lotader AX8900 resin (a random copolymer of ethylene, methyl methacrylate, and glycidyl methacrylate, in which the content of the structural unit formed by glycidyl methacrylate is 8 wt%, and the melting point is 60°C) available from Arkema was used.
(3) A metal-resin composite was prepared through the same method as described in Step (3) of Example 1, except that the granular resin material prepared in Step (2) of Comparative Example 2 was used. The performance data of the prepared metal-resin composite is shown in Table 1.

### Example 2

(1) A metal substrate was prepared through the same method as described in Step (1) of Example 1.
(2) A granular resin material was prepared through the same method as described in Step (2) of Example 1, except that no bond force enhancing resin was used.
(3) A metal-resin composite was prepared through the same method as described in Step (3) of Example 1, except that the granular resin material prepared in Step (2) of Example 2 was used. The performance data of the prepared metal-resin composite is shown in Table 1.

### Example 3

(1) A metal substrate was prepared through the same method as described in Step (1) of Example 1.
(2) A granular resin material was prepared through the same method as described in Step (2) of Example 1, except that the polyphenylene sulfide resin (PPS-Hb available from Sichuan Deyang Chemical Co.) was used without screening, in which the ash content is 0.70 wt%.
(3) A metal-resin composite was prepared through the same method as described in Step (3) of Example 1, except that the granular resin material prepared in Step (2) of Example 3 was used. The performance data of the prepared metal-resin composite is shown in Table 1.

### Example 4

(1) A metal substrate was prepared through the same method as described in Step (1) of Example 1.
(2) A granular resin material was prepared through the same method as described in Step (2) of Example 1, except that the glass fiber used is a E glass fiber (988A available from Zhejiang Jushi Co., Ltd., in which the silica content is 60 wt%).
(3) A metal-resin composite was prepared through the same method as described in Step (3) of Example 1, except that the granular resin material prepared in Step (2) of Example 4 was used. The performance data of the prepared metal-resin composite is shown in Table 1.

### Example 5

(1) A metal substrate was prepared through the same method as described in Step (1) of Example 1.
(2) A granular resin material was prepared through the same method as described in Step (2) of Example 1, except that 2 parts by weight of GR205 resin available from Dow Chemical Company was used (which is a random copolymer of maleic anhydride with ethylene, in which the content of the structural unit formed by maleic anhydride is 1.8 wt%, the incipient melting temperature is 122°C, and the melting point is 130°C) in place of the bond force enhancing resin.
(3) A metal-resin composite was prepared through the same method as described in Step (3) of Example 1, except that the granular resin material prepared in Step (2) of Example 5 was used. The performance data of the prepared metal-resin composite is shown in Table 1.

### Example 6

(1) An SUS304 stainless steel plate of 1.0 mm in thickness was cut into a rectangular plate of 100 mm long x 15 mm wide, and then immersed for 2 min in 35 wt% hydrochloric acid (where the solution temperature was 50°C). The stainless steel plate was removed, washed 3 times with deionized water, and dried to obtain a metal substrate. The surface of the metal substrate was observed under an electron microscope, to determine that corrosion holes with an average inner diameter of 150 nm are distributed on the surface of the stainless steel plate.
(2) A polyphenylene sulfide resin (PPS-1H30C) having an ash content of 0.1 wt%, a crystallization temperature of 121°C, and a glass transition temperature of 90°C was used.
63 parts by weight of the polyphenylene sulfide resin, 0.65 parts by weight of a bond force enhancing resin (GR209 available from Dow Chemical Company, which is a random copolymer of maleic anhydride with ethylene, in which the content of the maleic anhydride group is 1.5 wt%, the incipient melting temperature is 105°C, and the melting point is 115°C), and 2.5 parts by weight of a modified resin (Lotader AX8840 available from Arkema, which is a random copolymer of ethylene with glycidyl methacrylate, in which the content of the structural unit formed by glycidyl methacrylate is 4 wt%, and the melting point is 106°C) were uniformly mixed. Then 25.2 parts by weight of D glass fiber (D-glass available from Chongqing International Composite Materials Co., Ltd, in which the silica content is 75 wt%) and 0.5 part by weight of silicone as a lubricant (available from Wacker Chemie, under the trademark GENIOPLAST) were added, mixed uniformly in a twin screw extruder and then granulated by extrusion, to obtain a granular material. The granular material was injection molded, to obtain specimens that were used in the tensile test, the notched impact test, and the dielectric loss test respectively, to determine the tensile strength, the notched Izod impact strength, the dielectric constant, and the dielectric loss tangent. The result is shown in Table 1.
(3) A melt of the granular material obtained in Step (2) was injected onto the surface of the metal substrate obtained in Step (1) by an injection molding machine, and cooled to obtain a metal-resin composite, in which the mould temperature was 110°C, the nozzle temperature was 300°C, the holding time was 2 seconds, the injection pressure was 50 MPa, the injection time was 1 second, and the delay time was 5 seconds. The formed resin layer has a size of 100 mm long x 15 mm wide x 1 mm thick, the metal substrate is lap joined to the resin layer at a site of 5 mm long x 15 mm wide. The performance data of the metal-resin composite is shown in Table 1.

**Table 1**

| No. | Average shear strength/MPa | Tensile strength/MPa | Notched impact strength/J/m | Dielectric constant | Dielectric loss tangent |
|---|---|---|---|---|---|
| Example 1 | 22 | 120 | 170 | 3.40 | 0.005 |
| Comparative Example 1 | 22 | 130 | 90 | 3.65 | 0.005 |
| Comparative Example 2 | 21 | 115 | 170 | 3.59 | 0.012 |
| Example 2 | 16 | 130 | 170 | 3.57 | 0.005 |
| Example 3 | 22 | 120 | 170 | 3.55 | 0.008 |
| Example 4 | 22 | 120 | 170 | 3.59 | 0.005 |
| Example 5 | 18 | 121 | 170 | 3.62 | 0.006 |
| Example 6 | 21 | 112 | 165 | 3.40 | 0.005 |

As can be seen from the comparison of Example 1 with Comparative Examples 1 and 2, the metal-resin composite formed by using the resin composition according to the present disclosure and a metal substrate has not only a high impact resistance, but also a low dielectric constant, a low dielectric loss, and a small interference for the electromagnetic signal, thus being suitable for use as an electronic product shell.

As can be seen from the comparison of Example 1 with Examples 2 and 5, the bond strength between the metal substrate and the resin layer in the metal-resin composite can be further enhanced by introducing a bond force enhancing resin in the resin composition, thus increasing the structure stability of the metal-resin composite.

As can be seen from the comparison of Example 1 with Example 3, the dielectric loss of the ultimately prepared metal-resin composite can be further reduced by reducing the ash content in the base resin.

As can be seen from the comparison of Example 1 with Example 4, when a glass fiber with high silica content is used, the dielectric constant of the ultimately prepared metal-resin composite can be further reduced, thereby further reducing the interference for the electromagnetic signal and avoiding the rapid attenuation of the electromagnetic signal intensity.

## Claims

1. A resin composition, comprising a base resin, a modified resin and a fiber, wherein the base resin is at least one of a polyarylene sulfide resin, a polyether resin, and a polyester resin, and the modified resin has a melting point that is 3-24°C higher than the glass transition temperature of the base resin, and present in an amount of 1-10 parts by weight, relative to 100 parts by weight of the base resin.

2. The resin composition according to claim 1, wherein the modified resin has a melting point that is 10-20°C higher than the glass transition temperature of the base resin.

3. The resin composition according to claim 1 or 2, wherein the modified resin includes a polyolefin having an epoxy group-containing structural unit.

4. The resin composition according to any one of claims 1 to 3, wherein the modified resin has a structural unit formed by an olefin and an epoxy group-containing structural unit of Formula I: 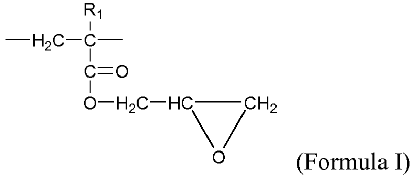 wherein in Formula I, R₁ is hydrogen or C₁-C₅ alkyl.

5. The resin composition according to any one of claims 1 to 4, wherein the modified resin has a structural unit formed by ethylene and an epoxy group-containing structural unit of Formula II:

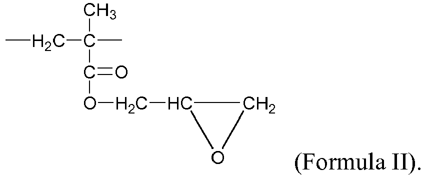

6. The resin composition according to any one of claims 3 to 5, wherein the content of the epoxy group-containing structural unit in the modified resin is 1-8 wt%.

7. The resin composition according to any one of claims 1 to 6, further comprising at least a bond force enhancing resin, wherein the incipient melting temperature of the bond force enhancing resin is 10-20°C lower than the crystallization temperature of the base resin.

8. The resin composition according to claim 7, wherein the bond force enhancing resin includes a polyolefin having a structural unit containing a maleic anhydride group.

9. The resin composition according to claim 8, wherein the content of the structural unit containing a maleic anhydride group in the bond force enhancing resin is 0.5-2 wt%.

10. The resin composition according to any one of claims 7 to 9, wherein the content of the bond force enhancing resin is 1-5 parts by weight relative to 100 parts by weight of the base resin.

11. The resin composition according to any one of claims 1 to 10, wherein the ash content in the base resin is not higher than 0.2 wt%.

12. The resin composition according to any one of claims 1 to 11, wherein the base resin is at least one selected from a polyphenylene sulfide resin, a polyphenylene ether resin, and a polyalkylene terephthalate.

13. The resin composition according to any one of claims 1 to 12, wherein the content of the fiber is 10-60 parts by weight relative to 100 parts by weight of the base resin.

14. The resin composition according to any one of claims 1 to 13, wherein the fiber is a glass fiber, and the silica content in the glass fiber is 70 wt% or higher, and preferably 70-75 wt%.

15. A metal-resin composite, comprising a metal substrate and a resin layer attached to at least part of a surface of the metal substrate, wherein the resin layer is formed with a resin composition according to any one of claims 1 to 14.

16. The composite according to claim 15, wherein holes and/or grooves are distributed on the surface of the metal substrate to which the resin layer is attached, and a part of the resin in the resin layer extends downward and is filled in the holes and/or grooves.

17. A method for preparing a metal-resin composite, comprising uniformly mixing a resin composition according to any one of claims 1 to 14, injecting onto a surface of a metal substrate, and molding, to form a resin layer on the surface of the metal substrate.

18. The method according to claim 17, wherein holes and/or grooves are distributed on the surface of the metal substrate.

19. A metal-resin composite prepared by the method according to claim 17 or 18.

20. Use of a metal-resin composite according to any one of claims 15 to 16 or a metal-resin composite according to claim 19 in the preparation of an electronic product shell.

21. An electronic product shell, comprising a metal shell body and at least one resin member attached to at least part of an inner surface and/or at least part of an outer surface of the metal shell body, wherein the resin member is formed with the resin composition according to any one of claims 1 to 14.
